# EUROPÄISCHE PATENTSCHRIFT

(11) **EP 0 896 500 B1**
(45) Veröffentlichungstag und Bekanntmachung des Hinweises auf die Patenterteilung: **07.05.2003**
(21) Anmeldenummer: 98114387.8
(22) Anmeldetag: 31.07.1998
(51) Int. Cl.: H05B 41/38

(54) **Verfahren zur Generierung des Stromsollwertes für ein Steuergerät für den schnellen Lichtanlauf einer Hochdruck-Gasentladungslampe**
Process for generating a reference signal for a control device for obtaining a quick light-on of high-pressure discharge lamps
Procédé de génération d'un signal de référence pour un dispositif de contrôle pour obtenir une montée en puissance rapide de lampes à décharge à haute pression

(30) Priorität: 08.08.1997 DE 19734359
(43) Veröffentlichungstag der Anmeldung: 10.02.1999
(73) Patentinhaber: Automotive Lighting Reutlingen GmbH, 72762 Reutlingen (DE)
(72) Erfinder: Eckart, Klaus, 77770 Durchbach Ebersweier (DE); Wilbert, Rolf, 71154 Nufringen (DE)
(74) Vertreter: Dreiss, Fuhlendorf, Steimle & Becker

(56) Entgegenhaltungen:
- EP-A- 0 415 496
- EP-A- 0 459 126
- EP-A- 0 618 754
- DE-A- 4 428 850
- US-A- 5 463 287

## Beschreibung

### Stand der Technik

Die Erfindung geht aus von einem Steuergerät für den schnellen Lichtanlauf einer Hochdruck-Gasentladungslampe, insbesondere für den Einsatz in Kraftfahrzeugscheinwerfern, der im Oberbegriff des Anspruchs 1 definierten Gattung.

Aus der EP 0 618 754 A ist ein Verfahren zum Generieren eines Regelsignals für den schnellen Lichtanlauf einer Hochdruck-Gasentladungslampe in einem Kraftfahrzeug offenbart. Dabei wird der Anlauf der Gasentladungslampe mit Überlast gesteuert, wobei zu einem normalen Betrieb mit einer fallenden Charakteristik, deren Zeitkonstante unabhängig von der Lampenspannung ist, erfolgt. Damit sollen Lichtsattel vermieden werden.

Aus der US 5,463,287 ist ein Verfahren zum Generieren eines Leistungssollwertes für den schnellen Lichtanlauf einer Hochdruck-Gasentladungslampe in einem Kraftfahrzeug bekannt, wobei der Lampenzustand bei der Ermittlung des maximal zulässigen Wertes des Stromes nach dem Zünden berücksichtigt wird.

Aus dem Stand der Technik ist es somit bekannt, dass beim Anlauf einer Hochdruck-Gasentladungslampe Lampensattel auftreten können. Außerdem ist es bekannt, in der Anlaufphase den Lampenzustand zu berücksichtigen.

Aus der DE 41 36 486 A1 ist ein Vorschaltgerät zum Starten und Betreiben von Wechselstrom-Hochdruck-Gasentladungslampen bekannt, welches aus einer Gleichspannungsquelle, z.B. der Batterie eines Kraftfahrzeuges gespeist wird. Dabei wird mittels eines DC/DC Wandlers zunächst aus der Gleichspannung einer Gleichspannungsquelle eine stabilisierte und /oder leistungsgeregelte Gleichspannung erzeugt, die einen höheren Spannungswert hat. Dann wird aus dieser Spannung mit Hilfe einer gesteuerten Brückenschaltung der für den Betrieb erforderliche Wechselstrom erzeugt. Die Brückenschaltung kann sowohl im Gleichstrom- als auch im Wechselstrombetrieb betrieben werden und bildet die Versorgungsschaltung für die Hochdruck-Gasentladungslampe. Die Steuerung der Brückenschaltung erfolgt von einer Steuerschaltung und für die Zündung der Hochdruck-Gasentladungslampe ist eine Zündvorrichtung vorgesehen.

Bei diesem bekannten Vorschaltgerät wird zur Erzielung eines schnellen und zuverlässigen Zündens sowie schnelles und zuverlässiges Erreichen eines stabilen Brennzustandes ohne Flackern der Lampe, die Brückenschaltung bei Inbetriebnahme im Gleichstrombetrieb betrieben. Über eine Statusbestimmeinrichtung wird ein Signal erzeugt, wenn die Hochdruck-Gasentladungslampe erfolgreich gezündet wurde. Dieses Signal wird über eine Verzögerungsschaltung der Steuerschaltung für die Brückenschaltung zugeführt und sorgt dafür, dass erst nach der gegebenen Verzögerungszeit die Brückenschaltung von Gleichstrombetrieb in den Wechselstrombetrieb umgeschaltet wird.

Zur Steuerung beim Anlauf einer Hochdruck-Gasentladungslampe ist generell die Vedilis-Kurve als Strom-/Spannungskurve im Sinne einer Sollwertkurve vorgegeben. Die Vedilis-Kurve ist in den "System Specifications for Field Test" des VEDILIS Eureka Project 273 auf Seite B 1/3 dargestellt und als Strom-/Spannungskennlinie für in Kraftfahrzeugen einzusetzende Gasentladungslampen vorgegeben. Dabei steht "Vedilis" als Abkürzung für "Vehicle Discharge Light System". Zur Regelung der Lampenleistung einer Gasentladungslampe wird danach in der Anlauf- bzw. Brennphase die Lampenspannung gemessen und aus der Vedilis-Kurve der entsprechende, zur jeweiligen Lampenspannung gehörige Lampenstrom ermittelt. Dieser Lampenstrom dient dann als Sollwert für den nachfolgenden Stromregelkreis, mit dem die Lampenleistung auf einen konstanten Wert, z.B. 35 W geregelt wird.

Generell ist es zur Nutzung einer Gasentladungslampe im Kraftfahrzeugscheinwerfer notwendig, möglichst viel Licht innerhalb kurzer Zeit nach dem Einschalten des Steuergerätes zur Verfügung zu stellen. Dies wird als schneller Lichtanlauf bezeichnet. Wie die o.g. Vedilis-Kurve vorgibt, kann dazu die Gasentladungslampe direkt nach dem Einschalten mit einer bestimmten Überlast betrieben werden. Diese Überlast wird dabei in Abhängigkeit von der Lampenspannung zurückgefahren. Es ist klar, dass durch eine derartige Überlast die Lampe nicht zerstört oder in ihrer Lebensdauer beeinträchtigt werden darf. Diese Forderung ist für alle Betriebsbedingungen einzuhalten. Des weiteren ist die Steuerung so zu wählen, dass die Lichtleistung nicht von einem bereits erreichten Wert wieder zurückschwingt, da dies zum einen allgemein als unangenehme Helligkeitsveränderung empfunden wird und zum anderen den gesetzlichen Anforderungen nicht entsprechen würde. Dieses Zurückschwingen der Lichtleistung wird auch als Lichtsattel bezeichnet.

In der Praxis hat es sich herausgestellt, dass eine Steuerung gemäss der o.g. Vedilis-Kurve Lichtsattel nicht vermeiden kann. Daher ist hier nach anderen Wegen zu suchen. Eine generelle Möglichkeit besteht darin, den Überlastbetrieb der Gasentladungslampe über eine Zeitsteuerung zu betreiben. Eine solche Möglichkeit ist bspw. aus der EP 0 415 496 A2 bekannt. Diese Druckschrift offenbart eine Schaltungsanordnung zum Speisen einer Last, bspw. einer Hochdruck-Gasentladungslampe für Kraftfahrzeuge. Beim Einschalten der Lampe wird die Last mit einer höchst zulässigen Leistung beaufschlagt, die anschließend vermindert wird, und zwar nach einer ersten Verzögerungszeit durch einen Verminderungsfaktor, der linear bzw. stetig von Null auf einen Endwert ansteigt, und nach einer zweiten Verzögerungszeit durch den normalen Regelwert.

Hierbei ist jedoch zu beachten, dass entsprechend dem jeweilige Zustand der Gasentladungslampe diese gegebenenfalls eine zu grosse Lichtmenge abgibt, welche nicht den Vorschriften entspricht. Dieses Nichtbeachten des jeweiligen Zustands der Gasentladungslampe kann auch zur Zerstörung der Gasentladungslampe oder zumindest zur Beeinträchtigung ihrer Lebensdauer führen.

### Vorteile der Erfindung

Das erfindungsgemässe Verfahren zur Generierung des Stromsollwertes für ein Steuergerät für den schnellen Lichtanlauf einer Hochdruck-Gasentladungslampe mit den kennzeichnenden Merkmalen des Anspruchs 1 hat demgegenüber den Vorteil, eine neue, einfache und zuverlässige Regelstrategie für den besseren Lichtanlauf zur Verfügung zu stellen, um den Überlastbetrieb der Hochdruck-Gasentladungslampe deren jeweiligem Zustand genau anzupassen unter Vermeidung von Lichtsatteln und irgendwelchen schädlichen Einflüssen auf die Lebensdauer der Hochdruck-Gasentladungslampe. Da anstelle der Vedilis-Kurve eine zeitabhängige Steuerung verwandt wird, werden Lichtsattel vermieden und beim Einschalten wird der Lampenzustand berücksichtigt, ob die Lampe nämlich beispielsweise kalt, warm oder heiss ist.

Gemäss dem Verfahren nach der Erfindung ist dazu prinzipiell der Stromsollwert aus zwei Komponenten zusammengesetzt, zum einen aus einer Komponente, die der vorgegebenen Leistungskurve in Abhängigkeit von der Lampenspannung für eine konstante Leistung von z.B. 35W Nennleistung im stationären Betriebszustand, entspricht, und zum anderen aus einer Komponente, die gemäss einem Faktor entsprechend einer, eine Leistungsveränderung bewirkenden Kurve bestimmt ist und der die Überlast beim Anlauf repräsentiert.

In vorteilhafter Ausgestaltung der Erfindung ist dazu vorgesehen, dass der eine Leistungsveränderung bewirkende Faktor entsprechend einer Mehrleistungskurve oder entsprechend einer Gesamtleistungskurve von der Zeit nach dem Zünden abhängig ist.

Nach einer besonders zweckmässigen Weiterbildung der Erfindung ist vorgesehen, dass der eine Leistungsveränderung bewirkende Faktor in regelmässigen Zeitabständen, insbesondere gemäss einer vorteilhaften Realisierung alle 400 ms, neu bestimmt wird.

In einer ersten besonders vorteilhaften Ausführungsform des erfindungsgemässen Verfahrens wird jedem Stromsollwert, welcher bei einer bestimmten Lampenspannung einem entsprechenden Wert der Konstantleistungskurve entspricht, ein mit einem Zusatzfaktor der Mehrleistungskurve multiplizierter Wert dieses Stromsollwertes hinzuaddiert, um den aus den beiden Komponenten zusammengesetzten Stromsollwert zu generieren. Dabei hat der Zusatzfaktor beispielsweise einen Wert kleiner als 1, wenn die maximale Mehrleistung geringer als die Nennleistung ist.

In einer zweiten vorteilhaften zur ersten alternativen Ausführungsform der Erfindung ist vorgesehen, dass jedem Stromsollwert, welcher bei einer bestimmten Lampenspannung einem entsprechenden Wert der Konstantleistungskurve entspricht, mit einem Faktor für die Gesamtleistung einer Gesamtleistungskurve bezogen auf die Nennleistung, multipliziert wird, um den aus den beiden Komponenten zusammengesetzten Stromsollwert zu generieren.

In besonders vorteilhafter und zweckmässiger Weiterbildung der Erfindung sind die Werte der verschiedenen Wertekurven in Tabellen abgespeichert. Dadurch können Flexibilität und Schnelligkeit gesteigert werden.

In vorteilhafter Ausgestaltung der Erfindung ist der Einstieg in die Mehrleistungskurve oder in die Gesamtleistungskurve, insbesondere dann, wenn diese zeitabhängig sind, je nach der Temperatur der Lampe unterschiedlich gewählt. Dies berücksichtigt die unterschiedlichen Lampenzustände in zweckmässiger Weise.

Entsprechend einer vorteilhaften Weiterbildung des erfindungsgemässen Verfahrens hat die Leistungskurve, die mit Hilfe der Erfindung realisiert wird, im wesentlichen den Verlauf einer abklingenden e-Funktion.

Das erfindungsgemässe Verfahren wird in Hardware oder sehr vorteilhaft in Software realisiert. Besonders zweckmässig ist es, einen Mikrokontroller mit Speicher vorzusehen, mit dessen Hilfe die Generierung des Stromsollwertes durchgeführt wird.

Gemäss einer weiteren vorteilhaften Ausgestaltung der Erfindung sind zum Schutz des Steuergerätes vor thermischer Zerstörung Leistungskurven für die Realisierung einer kleinen Leistung vorgesehen, die unterhalb der üblichen Nennleistung liegt.

### Zeichnung

Die Erfindung ist anhand von in der Zeichnung dargestellter Ausführungsbeispiele in der nachfolgenden Beschreibung näher erläutert. Es zeigen:
- Fig. 1: schematisch in einer Art von Blockschaltbild den Ablauf des erfindungsgemässen Verfahrens anhand einer ersten Realisierungsmöglichkeit;
- Fig. 2: schematisch in einer Art von Blockschaltbild den Ablauf des erfindungsgemässen Verfahrens anhand einer zweiten Realisierungsmöglichkeit;
- Fig. 3: den gewünschten Leistungsverlauf über der Zeit; und
- Fig. 4: in der sogenannten VEDILIS-Kurve den Leistungsverlauf über der Brennspannung.

### Beschreibung der Ausführungsbeispiele

Die Erfindung stellt ein Verfahren zur Verfügung, mit dem der gewünschte Leistungsverlauf im schnellen Lichtanlauf realisiert wird. Ausgehend von einer Kennlinie, welche beispielsweise die Leistungshyperbel für eine konstante Leistung von z.B. 35 W darstellt, kann die Leistung mit einem Faktor über der Zeit verändert werden, ohne Rücksicht auf die Grösse der Lampenspannung, deren Verlauf und Endwert exemplarabhängig ist. Desweiteren vereinfacht sich die Berechnung der Stellgrösse Strom, weil systembedingte Verluste bereits in die Leitungshyperbel oder allgemein in die verwendete Kennlinie, mit eingerechnet sind.

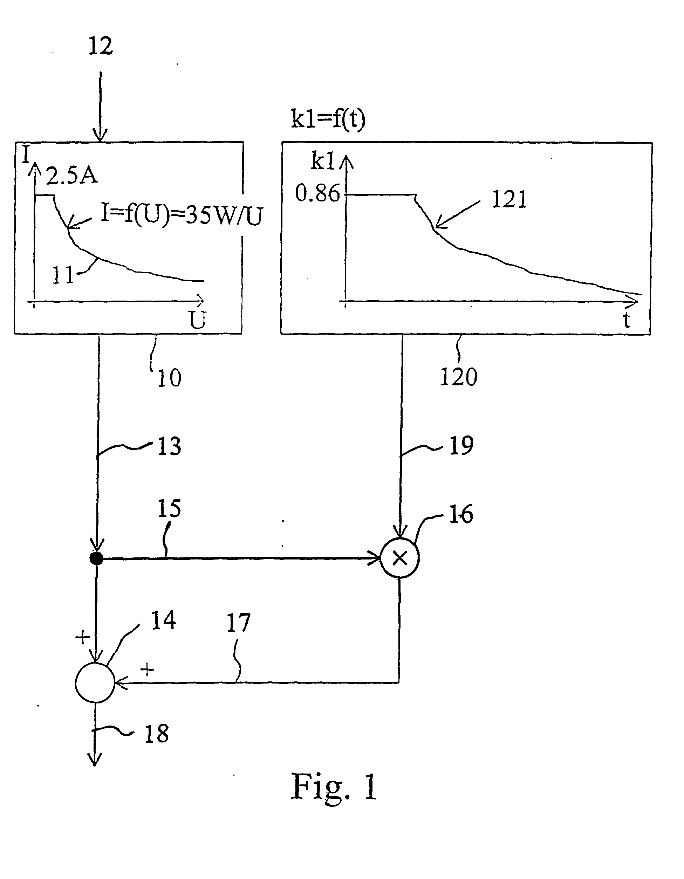

Anhand der Fig. 1 ist schematisch in einer Art von Blockschaltbild der Ablauf des erfindungsgemässen Verfahrens mittels einer ersten Realisierungsmöglichkeit dargestellt. Dabei sei angemerkt, dass bei einer softwaremässigen Realisierung der Erfindung, der nachstehend öfters verwendete Begriff Leitung dann nicht in allen Fällen für eine physikalische Leitung gilt, sondern sinngemäss zu verstehen ist.

Im Block 10 ist eine Stromsollwertkurve 11, I = f (U), beispielsweise I = 35 W/U, dargestellt. Auf Leitung 12 wird diesem Block 10 die gemessene Lampenspannung U zugeführt. Mit diesem Wert, der z.B. alle 1,25 ms ermittelt und zugeführt wird, geht man in die Stromsollwertkurve 11 bzw. einer ihr entsprechenden Tabelle, die nicht dargestellt ist, hinein und holt den diesem Spannungswert U entsprechenden Wert für den Strom I heraus. Die dargestellte und in Tabellenform abgespeicherte Stromsollwertkurve 11 kann beispielsweise eine 35 W Leistungshyperbel sein, welche der Hochdruck-Gasentladungslampe, die nicht dargestellt ist, im Nennbetrieb eine konstante Nennleistung von 35 W zuführt. Dieser aus der Stromsollwertkurve 11 ermittelte Stromwert wird auf Leitung 13 einer Additionsstelle 14 als eine erste Komponente für den Stromwert des Steuergerätes zugeführt. Das Steuergerät selbst ist nicht dargestellt.

Der auf Leitung 13 anstehende Stromwert wird über Leitung 15 einer Multiplikationsstelle 16 zugeführt. Dort wird er mit einem Zusatzfaktor k1 multipliziert und über eine Leitung 17 der Additionsstelle 14 als zweite Komponente für den Stromwert des Steuergerätes zugeführt. Auf der Ausgangsleitung 18 der Additionsstelle 14 steht nunmehr der gewünschte Stromsollwert für das Steuergerät an.

Der Multiplikationsstelle 16 wird über Leitung 19 der genannte Zusatzfaktor k1 von Block 120 zugeführt. Im Block 120 ist eine Mehrleistungskurve 121 dargestellt, und zwar der Zusatzfaktor k1 über der Zeit t. Der Zusatzfaktor k1 liegt gemäss dargestelltem Beispiel unter eins und beträgt beispielsweise maximal 0,86, wenn bei einer Nennleistung von 35 W eine maximale Mehr- oder Zusatzleistung von 30 W im Lichtanlauf gebracht werden soll. Der Zusatzfaktor k1 kann allgemein betrachtet auch über eins liegen und er kann bei einer Leistungsreduzierung auch negativ sein. Die Mehrleistungskurve 121 kann auch in Tabellenform abgespeichert sein. Da der dargestellte Zusatzfaktor k1 zeitabhängig ist, werden die entsprechenden Werte für k1 gemäss der nach Zündung bzw. Einschalten der Lampe verflossenen Zeit aus der Tabelle bzw. Mehrleistungskurve 121 entnommen und über Leitung 19 der Multiplikationsstelle 16 zugeführt. Die Entnahme dieser Werte kann beispielsweise alle 400 ms erfolgen, so dass in diesem Zeitrythmus der zugehörige, die Leistungsveränderung bewirkende Zusatzfaktor k1 zur Erzeugung der zweiten Komponente des Stromsollwertes erneuert und aktualisiert wird. Entsprechend einer besonderen Ausgestaltung kann der Einstiegspunkt in die Mehrleistungskurve 121 bzw. die zugehörige Tabelle in Abhängigkeit von der Lampentemperatur geändert werden. Ist die Lampe warm, springt man etwa im ersten Drittel oder der Mitte ein, ist die Lampe heiss, ziemlich im letzten Teil, dort wo sich der Zusatzfaktor k1 dem Wert Null nähert. Bei kalter Lampe wird die ganze Mehrleistungskurve 121 durchfahren.

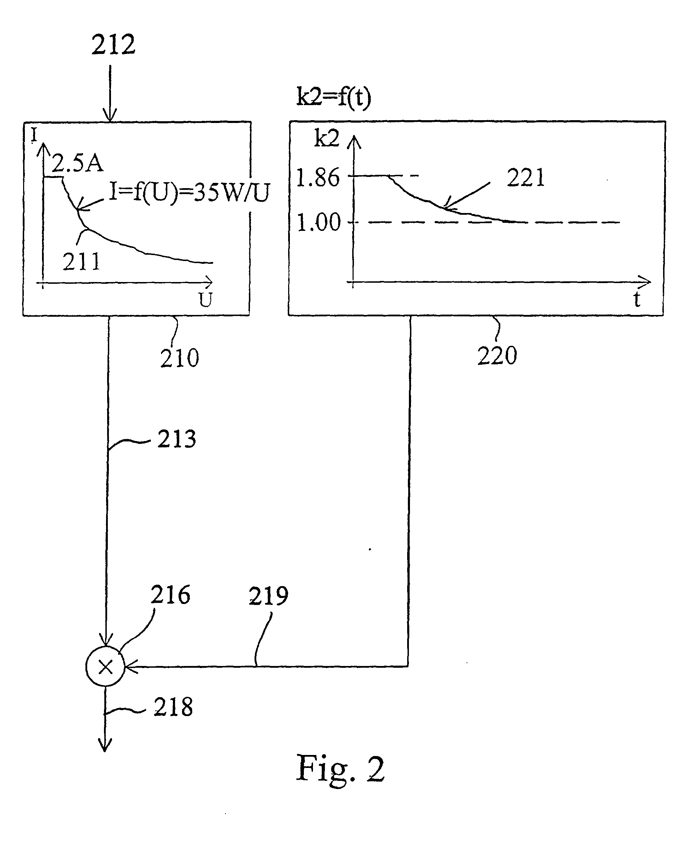

In Fig. 2 ist schematisch in einer Art von Blockschaltbild der Ablauf des erfindungsgemässen Verfahrens anhand einer zweiten Realisierungsmöglichkeit dargestellt, wobei die Additionsstelle entfällt. Im Block 210 ist eine Stromsollwertkurve 211, z. B. I = f (U) = 35 W/U, dargestellt. Diese Stromsollwertkurve 211 ist mit der in Fig. 1 dargestellten Stromsollwertkurve 11 identisch. Auf Leitung 212 wird diesem Block 210 die gemessene Lampenspannung U zugeführt. Mit diesem Wert, der z.B. alle 1,25 ms ermittelt und zugeführt wird, geht man in die Stromsollwertkurve 211 bzw. einer ihr entsprechenden Tabelle, die nicht dargestellt ist, hinein und holt den diesem Spannungswert U entsprechenden Wert für den Strom I heraus. Die dargestellte und in Tabellenform abgespeicherte Stromsollwertkurve 211 kann beispielsweise eine 35 W Leistungshyperbel sein, welche der Hochdruck-Gasentladungslampe, die nicht dargestellt ist, im Nennbetrieb eine konstante Nennleistung von 35 W zuführt. Dieser aus der Stromsollwertkurve 211 ermittelte Stromwert wird auf Leitung 213 einer Multiplikationsstelle 216 als eine erste Komponente für den Stromwert des Steuergerätes zugeführt. Das Steuergerät selbst ist nicht dargestellt.

In der Multiplikationsstelle 216 wird der aus der Stromsollwertkurve 211 ermittelte Stromwert mit einem Faktor k2 für die Gesamtleistung multipliziert. Auf einer Ausgangsleitung 218 der Multiplikationsstelle 216 steht als nunmehr der gewünschte Stromsollwert für das Steuergerät an.

Der Multiplikationsstelle 216 wird über Leitung 219 der genannte Faktor k2 für die Gesamtleistung von Block 220 zugeführt. Im Block 220 ist eine Gesamtleistungskurve 221 dargestellt, und zwar der Faktor k2 für die Gesamtleistung über der Zeit t. Der Faktor k2 für die Gesamtleistung liegt über eins und beträgt beispielsweise maximal 1,86, wenn bei einer Nennleistung von 35 W eine maximale Anlaufleistung von 65 W gebracht werden soll. Die Gesamtleistungskurve 221 kann auch in Tabellenform abgespeichert sein. Da der dargestellte Faktor k2 für die Gesamtleistung zeitabhängig ist, werden die entsprechenden Werte für k2 gemäss der nach Zündung bzw. Einschalten der Lampe verflossenen Zeit aus der Tabelle bzw. Gesamtleistungskurve 221 entnommen und über Leitung 219 der Multiplikationsstelle 216 zugeführt. Die Entnahme dieser Werte kann beispielsweise alle 400 ms erfolgen, so dass in diesem Zeitrythmus die Leistung auf Leitung 218 erneuert und aktualisiert wird. Entsprechend einer besonderen Ausgestaltung kann der Einstiegspunkt in die Gesamtleistungskurve 221 bzw. die zugehörige Tabelle in Abhängigkeit von der Lampentemperatur geändert werden. Ist die Lampe warm, springt man etwa im ersten Drittel oder der Mitte ein, ist die Lampe heiss, ziemlich im letzten Teil, dort wo sich der Faktor k2 für die Gesamtleistung dem Wert Eins nähert. Bei kalter Lampe wird die ganze Kurve 221 durchfahren.

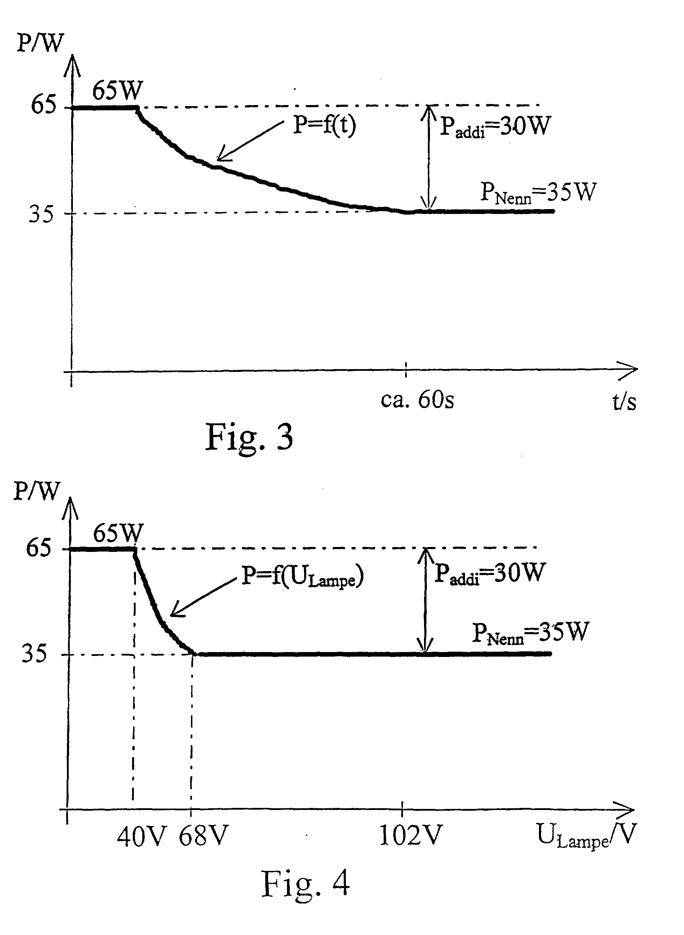

Zum besseren Verständnis des erfindungsgemässen Verfahrens ist in Fig. 3 der gewünschte Leistungsverlauf P/W über der Zeit t/sec dargestellt. Zu Beginn wird beispielsweise für etwa 5s eine konstante Leistung von 65 W abgegeben, dann nimmt entsprechend der Kurve 310 die Leistung P = f(t) vorzugsweise nach einer abklingenden e-Funktion ab, bis bei etwa 60s die Nennleistung von beispielsweise 35 W erreicht ist. Diesen für die Erreichung der besten Lichtleistung der Lampe optimalen Verlauf der der Lampe im schnellen Lichtanlauf zugeführten Gesamtleistung wird mit der vorliegenden Erfindung auf einfache und vorteilhafte Weise erreicht.

In Fig. 4 ist in der sogenannten VEDILIS-Kurve der Leistungsverlauf P/W über der Brennspannung der Lampe ULampe dargestellt, um auch hier das Verständnis für die Regelstrategie gemäss der Erfindung zu erhöhen. Auch in dieser Darstellung ist von einer Nennleistung von 35 W und einer maximalen Über- oder Mehrleistung Paddi von 30 W ausgegangen. Die Erfahrung mit einem derartigen Leistungsverlauf hat eindeutig gezeigt, dass dann, wenn die Regelung der Leistung ausschliesslich nach dieser VEDILIS-Kurve erfolgt, der Nachteil darin liegt, dass das Verhalten der Lampe in der Regelung nicht berücksichtigt ist. Da die Lampenspannung sehr schnell ansteigt, verschiebt sich der Arbeitspunkt der Kennlinie schnell zur kleineren Leistung hin. Dadurch wird wenig Leistung an die Lampe abgegeben und es dauert lange, bis die gewünschte Lichtmenge erreicht wird. Es werden dadurch die gesetzlichen Forderungen bezüglich der Lichtmenge, insbesondere bei kalter Lampe, nicht eingehalten.

Mit dem erfindungsgemässen Verfahren wird eine Regelstrategie zur Verfügung gestellt, durch die der Verlauf der Leistung beim schnellen Lichtanlauf so ist, dass die abgegebene Lichtmenge sehr schnell ihren Endwert von 100% erreicht und sich dann nicht mehr ändert. Bei Realisierung durch Software ist keine zusätzliche Hardware erforderlich. Das Verfahren benötigt wenig Programmcode und wenige Tabellenwerte, wodurch wenig ROM-Speicherplatz benötigt wird. Es benötigt weiterhin wenige Variablen, wodurch nur wenig RAM-Speicherplatz in Anspruch genommen wird. Ausserdem ist es wenig rechenintensiv. Es kann daher mit einem preisgünstigen Mikrokontroller realisiert werden. Dass eine Realisierung auch durch eine einfache Hardware möglich ist, sei der Vollständigkeit halber erwähnt.

## Patentansprüche

1. Verfahren zur Generierung des Stromsollwertes für ein Steuergerät, welches für den schnellen Lichtanlauf einer Hochdruck-Gasentladungslampe, insbesondere für die Verwendung in Kraftfahrzeugscheinwerfern, diese beim Einschalten mit Überlast beaufschlagt, **dadurch gekennzeichnet, dass** der Stromsollwert aus zwei Komponenten zusammengesetzt ist, zum einen eine Komponente, die der vorgegebenen Leistungskurve (11, 211) in Abhängigkeit von der Lampenspannung (U) für eine konstante Leistung von z.B. 35W Nennleistung im stationären Betriebszustand, entspricht, und zum anderen eine Komponente, die gemäss einem Faktor (k1, k2) entsprechend einer, eine Leistungsveränderung bewirkenden Kurve (121, 221) bestimmt ist und der die Überlast beim Anlauf repräsentiert.

2. Verfahren nach Anspruch 1, **dadurch gekennzeichnet, dass** der eine Leistungsveränderung bewirkende Faktor (k1, k2) entsprechend einer Mehrleistungskurve (121) oder entsprechend einer Gesamtleistungskurve (221) von der Zeit (t) nach dem Zünden abhängig ist.

3. Verfahren nach Anspruch 1 oder 2, **dadurch gekennzeichnet, dass** der eine Leistungsveränderung bewirkende Faktor (k1, k2) in regelmässigen Zeitabständen, insbesondere alle 400 ms, neu bestimmt wird.

4. Verfahren nach Anspruch 1, 2 oder 3, **dadurch gekennzeichnet, dass** jedem Stromsollwert (I), welcher bei einer bestimmten Lampenspannung (U) einem entsprechenden Wert der Konstantleistungskurve (11, 211) entspricht, ein mit einem Zusatzfaktor (k1) der Mehrleistungskurve (121) multiplizierter Wert dieses Stromsollwertes (I) hinzuaddiert wird, um den aus den beiden Komponenten zusammengesetzten Stromsollwert zu generieren (Fig. 1).

5. Verfahren nach Anspruch 1, 2 oder 3, **dadurch gekennzeichnet, dass** jeder Stromsollwert (I), welcher bei einer bestimmten Lampenspannung (U) einem entsprechenden Wert der Konstantleistungskurve (211) entspricht, mit einem Faktor (k2) für die Gesamtleistung einer Gesamtleistungskurve (221) bezogen auf die Nennleistung, multipliziert wird, um den aus den beiden Komponenten zusammengesetzten Stromsollwert zu generieren (Fig. 2).

6. Verfahren nach einem der vorigen Ansprüche, **dadurch gekennzeichnet, dass** die Werte der verschiedenen Wertekurven (11, 121; 211, 221) in Tabellen abgespeichert sind.

7. Verfahren nach Anspruch 4, 5 oder 6, **dadurch gekennzeichnet, dass** der Einstieg in die Mehrleistungskurve (121) oder in die Gesamtleistungskurve (221), insbesondere dann, wenn diese zeitabhängig sind, je nach der Temperatur der Lampe unterschiedlich gewählt ist.

8. Verfahren nach einem der vorigen Ansprüche, **dadurch gekennzeichnet, dass** die realisierte Leistungskurve (310) im wesentlichen den Verlauf einer abklingenden e-Funktion hat.

9. Verfahren nach einem der vorigen Ansprüche, **dadurch gekennzeichnet, dass** es in Hardware oder in Software realisiert wird.

10. Verfahren nach Anspruch 9, **dadurch gekennzeichnet, dass** ein Mikrokontroller mit Speicher vorgesehen ist, mit dessen Hilfe die Generierung des Stromsollwertes durchgeführt wird.

11. Verfahren nach einem der vorigen Ansprüche, **dadurch gekennzeichnet, dass** zum Schutz des Steuergerätes vor thermischer Zerstörung Leistungskurven für die Realisierung einer kleinen Leistung vorgesehen sind, die unterhalb der üblichen Nennleistung liegt.

## Claims

1. Method for generating the desired value of the current for a control device, which for quick starting of the light of a high pressure gas discharge lamp, in particular for use in motor vehicle headlights, on switching on charges it with overload, **characterised in that** the desired current value is composed of two components, on the one hand a component corresponding to the preset power curve (11, 211) as a function of the lamp voltage (U) for a constant power of e.g. 35 W nominal power in the stationary operating state, and on the other hand a component which is determined according to a factor (k1, k2) corresponding to a curve (121, 221) effecting a change in power and which represents the overload on starting.

2. Method according to claim 1, **characterised in that** the factor (k1, k2) effecting a change in power corresponding to a multiple power curve (121) or corresponding to a total power curve (221) is dependent on the time (t) after igniting.

3. Method according to claim 1 or 2, **characterised in that** the factor (k1, k2) effecting a change in power is newly determined at regular intervals, in particular every 400 ms.

4. Method according to claim 1, 2 or 3, **characterised in that** to every desired current value (I) corresponding at a specific lamp voltage (U) to a corresponding value of the constant power curve (11, 211), is added a value of this desired current value (I) multiplied by an additional factor (k1) of the multiple power curve (121), in order to generate the desired current value composed of the two components (Fig. 1).

5. Method according to claim 1, 2 or 3, **characterised in that** every desired current value (I) corresponding at a specific lamp voltage (U) to a corresponding value of the constant power curve (211) is multiplied by a factor (k2) for the total power of a total power curve (221) related to the nominal power, in order to generate the desired current value composed of the two components (Fig. 2).

6. Method according to one of the previous claims, **characterised in that** the values of the various value curves (11, 121; 211, 221) are stored in tables.

7. Method according to claim 4, 5 or 6, **characterised in that** entry into the multiple power curve (121) or into the total power curve (221), in particular if they are time-dependent, is chosen differently depending on the temperature of the lamp.

8. Method according to one of the previous claims, **characterised in that** the power curve (310) produced substantially has the course of a dying-out e-function.

9. Method according to one of the previous claims, **characterised in that** it is produced in hardware or in software.

10. Method according to claim 9, **characterised in that** a microcontroller with memory is provided, with the aid of which generation of the desired current value is carried out.

11. Method according to one of the previous claims, **characterised in that** to protect the control device from thermal destruction power curves for producing a low power are provided, which are below the normal nominal power.

## Revendications

1. Procédé pour la génération d'une valeur de courant prescrite pour un contrôleur, lequel sert à allumer rapidement une lampe à décharge à haute pression, en particulier pour l'utilisation dans les phares de véhicules, laquelle lampe est alimentée avec surcharge lorsqu'on l'allume, **caractérisé en ce que** la valeur de courant prescrite est composée de deux composants, d'une part d'un composant qui correspond à la courbe de puissance prescrite (11, 211) en fonction de la tension de la lampe (U) pour une puissance constante de par exemple 35W de puissance nominale en état de fonctionnement stationnaire, et d'autre part d'un composant qui est déterminé selon un facteur (k1, k2) correspondant à une courbe (121, 221) causant une modification de la puissance et qui représente la surcharge lors du démarrage.

2. Procédé selon la revendication 1, **caractérisé en ce que** l'un des facteurs (k1, k2) causant la modification de puissance correspondant à une courbe de puissance multiple (121) ou correspondant à une courbe de puissance totale (221) dépend du temps (t) après l'allumage.

3. Procédé selon la revendication 1 ou 2, **caractérisé en ce que** l'un des facteurs (k1, k2) causant une modification de puissance est déterminé de nouveau dans des intervalles réguliers, en particulier toutes les 400 ms.

4. Procédé selon l'une des revendications 1, 2 ou 3, **caractérisé en ce qu'**à chaque valeur de courant prescrite (I) correspondant pour une tension de lampe (U) donnée à une valeur correspondante de la courbe de puissance constante (11, 211), est additionnée une valeur de cette valeur de courant prescrite (I) multipliée par un facteur supplémentaire (k1) de la courbe de puissance multiple (121) pour générer la valeur de courant prescrite composée des deux composants (figure 1).

5. Procédé selon l'une des revendications 1, 2 ou 3 **caractérisé en ce que** chaque valeur de courant prescrite (I) correspondant pour une tension de lampe donnée (U) à une valeur correspondante de la courbe de puissance constante (211) est multipliée avec un facteur (k2) pour la puissance totale d'une courbe de puissance totale (221) par rapport à la puissance nominale, pour générer la valeur de courant prescrite composée des deux composants (figure 2).

6. Procédé selon l'une quelconque des revendications précédentes, **caractérisé en ce que** les valeurs des différentes courbes de valeur (11, 121, 211, 221) sont enregistrées dans des tableaux.

7. Procédé selon la revendication 4, 5 ou 6, **caractérisé en ce que** l'accès à la courbe de puissance multiple (121) ou à la courbe de puissance totale (221) en particulier lorsque celles-ci sont dépendantes du temps est sélectionné différemment en fonction de la température de la lampe.

8. Procédé selon l'une quelconque des revendications précédentes, **caractérisé en ce que** la courbe de puissance réalisée (310) a principalement le parcours d'une fonction-e décroissante.

9. Procédé selon l'une quelconque des revendications précédentes, **caractérisé en ce qu'**il est réalisé dans du matériel informatique hardware ou dans des logiciels.

10. Procédé selon la revendication 9, **caractérisé en ce qu'**est prévu un microcontrôleur avec mémoire à l'aide duquel s'effectue la génération de la valeur de courant prescrite.

11. Procédé selon l'une quelconque des revendications précédentes, **caractérisé en ce que** pour protéger le contrôleur de la destruction thermique des courbes de puissance sont prévues pour la réalisation d'une puissance plus petite, se situant en dessous de la puissance nominale habituelle.
